# EUROPEAN PATENT APPLICATION

(11) **EP 2 364 595 A1**
(43) Date of publication of application: **14.09.2011**
(21) Application number: 11382049.2
(22) Date of filing: 25.02.2011
(51) Int. Cl.: A21D 13/00, A23L 1/32

(54) **Improved omelet**

(30) Priority: 25.02.2010 ES 201030166 U
(71) Applicant: Calixto y Melibea, S.L., 37008 Salamanca (ES)
(72) Inventor: Sanchez Zarzoso, Maribel, 37008, Salamanca (ES)
(74) Representative: Urizar Anasagasti, Jesus Maria

(57) **Abstract**

The invention relates to an improved omelet of a new omelet type which is covered with dough, which confers different texture, taste and preservation properties to the omelet and which has a special application in the food sector.

## Description

### Object of the Invention

The object of the present patent invention is to present a new improved omelet useful to provide an omelet which is covered with dough.

This new improved omelet has a special application in the food sector where an omelet with said features is required.

### Background of the Invention

To date, there are various types of omelets made from eggs together with various types of ingredients such as potatoes, vegetables, tuna, garlic, onion, etc., as many flavors as desired being amassed in said omelet.

Currently, in order to consume an omelet, it must be eaten served on a plate eaten with the hands by means of using toothpicks or in a sandwich (usually bread).

The current state of the art does not describe any type of improved omelet with the features described in the present patent.

### Description of the Invention

In order to overcome or, where appropriate, to eliminate the aforementioned problems, this new improved omelet, made up essentially of an omelet which is provided with a dough coating, is presented.

The oxidation of the omelet as time passes is avoided since said dough protects the omelet.

It contributes to a greater simplicity for it to be consumed under any type of circumstance without having to buy a side dish.

Upon baking the omelet, the dough becomes crunchy improving the texture of the omelet.

### Description of the Drawings

To complement the description that is being made and for the purpose of aiding to better understand the features of the invention, a figure is attached as an integral part of said description in which the following has been depicted with an illustrative and non-limiting character:

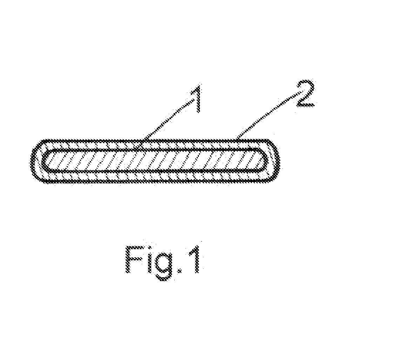

- Figure 1 shows a sectional view of the improved omelet.

### Preferred Embodiment of the Invention

This new improved omelet is made up of an omelet which is covered with dough.

Having sufficiently described the nature of the present invention as well as a way of carrying it out to practice, it merely remains to be added that said invention may have certain variations in the shape and materials, provided that said alterations do not substantially vary the features which are claimed below.

## Claims

1. An improved omelet, **characterised in that** it is covered with dough (2) which completely covers the omelet (1).
